# EUROPÄISCHE PATENTSCHRIFT

(11) **EP 4 338 905 B1**
(45) Veröffentlichungstag und Bekanntmachung des Hinweises auf die Patenterteilung: **04.03.2026**
(21) Anmeldenummer: 22195424.1
(22) Anmeldetag: 13.09.2022
(51) Int. Cl.: B26D 7/26, B26D 5/02, B21D 28/06, B21D 28/24, B21D 37/04, B30B 15/04

(54) **VORRICHTUNG UND VERFAHREN ZUM BEARBEITEN EINES MATERIALS**
DEVICE AND METHOD FOR PROCESSING A MATERIAL
DISPOSITIF ET PROCÉDÉ DE TRAITEMENT D'UN MATÉRIAU

(43) Veröffentlichungstag der Anmeldung: 20.03.2024
(73) Patentinhaber: Rychiger AG, 3613 Steffisburg (CH)
(72) Erfinder: Aeschlimann, Daniel, 3600 Thun (CH); Dellsperger, René, 3612 Steffisburg (CH)
(74) Vertreter: Keller Schneider Patent- und Markenanwälte AG

(56) Entgegenhaltungen:
- EP-A1- 3 299 136
- EP-A1- 3 689 561
- EP-A2- 0 997 444
- US-A- 4 604 934
- US-A1- 2006 255 083

## Beschreibung

### Technisches Gebiet

Die Erfindung betrifft eine Vorrichtung sowie ein Verfahren zum Bearbeiten eines Materials, insbesondere eines Bandmaterials, wobei mehrere Träger mit Bearbeitungswerkzeugen eingesetzt werden, welche in unterschiedlichen Abständen zueinander positioniert werden können.

### Stand der Technik

Im Stand der Technik sind diverse Vorrichtungen und Verfahren zum Bearbeiten von Bandmaterial bekannt, insbesondere Verfahren bei denen ein Abstand zwischen einzelnen Trägern, an denen Bearbeitungswerkzeuge angebracht sind, verändert werden können.

Die US 4,604,934 (PPG Industries) offenbart beispielsweise ein System zum Positionieren mehrerer Wagen entlang einer eine Arbeitsfläche überspannende Brücke. Der äusserste Wagen ist mit einer Antriebsvorrichtung verbunden, die weiteren Wagen lassen sich selektiv mit den benachbarten Wagen koppeln. Jeder Wagen (ausser der äusserste) lässt sich an einer Stange festklemmen. Zum Positionieren der Wagen werden sie zunächst in einer Startposition zusammengeschoben, anschliessend in der zusammengekoppelten Konfiguration mittels der Antriebsvorrichtung vorgezogen; sukzessive wird dann jeweils der hinterste Wagen an der entsprechenden Position vom Wagenzug gelöst und an der Stange festgeklemmt. Die Wagen weisen einen rechteckigen Grundkörper auf.

Die EP 0 997 444 (HEGLA) beschreibt ein Verfahren und eine Vorrichtung zum Positionieren von mehreren zumindest entlang zweier Raumachsen verschiebbaren Bearbeitungsköpfen einer Mehrkopf-Bearbeitungsmaschine. Dabei wird eine vollautomatische Positionierung der Bearbeitungsköpfe entlang einer einen Schneidtisch überspannenden Brücke ermöglicht. Die Bearbeitungsköpfe sind einzelnen Trägerschlitten zugeordnet und werden für die Positionierung zunächst engstmöglich zueinander angeordnet. Anschliessend werden die Schlitten durch einen der Schlitten, der entlang der Brückenlängsachse antreibbar ist, bewegt; nach Erreichen der jeweiligen Sollposition wird der betreffende Schlitten bezüglich der Brückenlängsachse arretiert, aus dem Verbund gelöst und an die bereits positionierten Schlitten gekoppelt. Dazu sind jeweils zwei benachbarte Trägerschlitten über jeweils eine Gleitstange verbunden, wobei sich jeweils einer der Schlitten mit Hilfe einer Klemmeinrichtung an der Gleitstange festklemmen lässt. Die Bearbeitungsköpfe liegen in der Form von Schlitten vor, an denen Bearbeitungswerkzeuge angebracht werden können.

### Darstellung der Erfindung

Aufgabe der Erfindung ist es, eine dem eingangs genannten technischen Gebiet zugehörende Vorrichtung zu schaffen, welche zur Bearbeitung eines Materials, insbesondere eines Bandmaterials, geeignet ist, wobei sich ein Abstand zwischen den Trägern bzw. den daran angeordneten Bearbeitungswerkzeugen verändern lässt.

Die Lösung der Aufgabe ist durch die Merkmale des Anspruchs 1 definiert. Gemäss der Erfindung umfasst die Vorrichtung mindestens zwei Träger mit jeweils mindestens einem Bearbeitungswerkzeug für das Material, mindestens einer Linearführung, auf welcher die mindestens zwei Träger linear verschiebbar angeordnet sind, sowie einer entlang der mindestens einen Linearführung in zwei entgegengesetzten Richtungen beweglich angetriebenen Schubstange. Die mindestens zwei Träger verfügen jeweils über eine Kopplungseinrichtung, mit denen sich jeder der mindestens zwei Träger selektiv mit der Schubstange koppeln lässt. Die Vorrichtung verfügt über eine Steuerung, mit welcher sich die Kopplungseinrichtungen steuern lassen, so dass mittels der Schubstange die mindestens zwei Träger gemeinsam entlang der mindestens einen Linearführung bewegt werden können oder jeweils nur einer oder mehrere definierte der mindestens zwei Träger, so dass sich ein Abstand zwischen den mindestens zwei Trägern verändern lässt.

Dadurch, dass ein selektives Koppeln der mindestens zwei Träger mit der Schubstange möglich ist, kann ein Abstand zwischen den Trägern bzw. den daran angebrachten Bearbeitungswerkzeugen einfach verändert werden. Ferner lassen sich, sofern alle Träger an der Schubstange gekoppelt sind, alle Träger gleichzeitig durch die Schubstange bewegen.

Die Vorrichtung verfügt vorzugsweise über ein Gestell, auf dem die einzelnen Komponenten der Vorrichtung angeordnet bzw. abgestützt sind. Das Gestell verfügt vorzugsweise über Sockel oder Füsse, mit denen das Gestell auf einem Boden gestellt werden kann.

Die Bearbeitungswerkzeuge sind vorzugsweise Stanzwerkzeuge und/oder Tiefziehwerkzeuge. Dadurch lassen sich zum Beispiel Formteile aus dem Material schneiden und anschliessend dreidimensional formen. Alternativ können jedoch auch andere Bearbeitungswerkzeuge an den mindestens zwei Trägern angeordnet sein, wie z. B. Presswerkzeuge. Die Bearbeitungswerkezeuge können bei der Bearbeitung des Materials mehrere Bearbeitungsschritte ausführen, zum Beispiel die bereits erwähnte Abfolge der Bearbeitungsschritte Schneiden und dreidimensional formen. Die zur Bearbeitung des Materials nötige Abfolge von Bearbeitungsschritten ergibt einen Bearbeitungstakt. Beim bereits erwähnten Beispiel für die Herstellung eines tiefgezogenen Formteils bilden daher die Bearbeitungsschritte des Schneidens und anschliessenden dreidimensionalen Formens zusammen einen Bearbeitungstakt.

Das mit den Bearbeitungswerkzeugen bearbeitete Bandmaterial ist vorzugsweise ein Metall-, Papier-, Papp- oder Kunststoffband. Die Dicke des Bandmaterials kann unterschiedlich sein, liegt jedoch vorzugsweise im Bereich von 0.1 mm bis 10 mm.

Die mindestens zwei Träger bestehen vorzugsweise aus einem Metall oder einer Metalllegierung, insbesondere aus Aluminium, Stahl oder Edelstahl. Alternativ bevorzugt können die mindestens zwei Träger aus Kunststoff, insbesondere einem verstärkten Kunststoff, wie z.B. einem mit Glas- oder Kohlestofffasern verstärktem Kunststoff bestehen. Die mindestens zwei Träger verfügen über mindestens ein Gleitlager, mindesten einer Rolle oder dergleichen, damit die mindestens zwei Träger beweglich auf der mindestens einen Linearführung angeordnet sind. Die mindestens eine Linearführung verfügt dementsprechend vorzugsweise über ein Gleitlager, einer Führungsschiene oder eine Führungsnut.

Die Vorrichtung umfasst vorzugsweise mehr als zwei Träger, insbesondere mehr als 5 Träger, bevorzugt 10, 11 oder 12 Träger. Die maximale Anzahl der Träger, die die Vorrichtung aufweist, hängt in der Regel von der Breite des zu bearbeitenden Materials sowie der Grösse bzw. dem Durchmesser der Bearbeitungswerkzeuge ab, wobei die Vorrichtung je nach beabsichtigter Bearbeitung des Materials bzw. je nach verwendetem Verfahren auch weniger Träger als die maximale Anzahl der Träger aufweisen kann. Ferner kann die Vorrichtung über mehr als eine Linearführung verfügen, welche parallel und insbesondere beabstandet zueinander angeordnet sind.

Die mindestens eine Linearführung erstreckt sich bei der bestimmungsmässigen Verwendung der Vorrichtung in horizontaler Richtung. Sofern mehr als eine Linearführung vorhanden ist, sind die Linearführungen vorzugsweise voneinander beabstandet angeordnet. Vorzugsweise sind die Linearführungen bei bestimmungsgemässer Verwendung der Vorrichtung in vertikaler Richtung voneinander beabstandet. Die Linearführungen können in vertikaler Richtung direkt untereinander, d.h. in derselben vertikal angeordneten Ebene angeordnet sein. Vorzugsweise sind die Linearführungen jedoch in horizontaler Richtung zueinander versetzt angeordnet, d.h. diese befinden sich bei der bestimmungsgemässen Verwendung der Vorrichtung nicht in derselben vertikalen Ebene, sondern jeweils in zueinander horizontal versetzten vertikalen Ebenen.

Insbesondere bevorzugt verfügt die Vorrichtung über zwei parallele Linearführungen.

Die mindestens eine Linearführung verfügt vorzugsweis an beiden Enden über Anschläge, welche die Bewegung der mindestens zwei Träger auf einen definierten Verschiebebereich begrenzen.

Die Schubstange ist vorzugsweise parallel zu der mindestens einen Linearführung angeordnet und ist mittels mindestens eines Lagers, insbesondere eines Gleitlagers oder eine Wälzlagers, beweglich an der mindestens einen Linearführung oder am Gestell der Vorrichtung abgestützt. Die Schubstange wird mittels eines Antriebs, insbesondere mittels eines Elektromotors, eines elektromechanischen Antriebs, eines Pneumatik- oder Hydraulikantriebs in die zwei entgegengesetzten Richtungen bewegt.

Die Schubstange weist vorzugsweise einen runden Querschnitt auf. Alternativ kann die Schubstange jedoch auch einen anderen Querschnitt aufweisen, z.B. quadratisch, rechteckig, oval oder polygonal. Die Schubstange ist vorzugsweise aus einem Metall oder einer Metalllegierung gefertigt, so dass diese möglichst steif ist. Alternativ kann die Schubstange jedoch auch aus einem anderen Werkstoff bestehen, z.B. einem Polymer, insbesondere einem kohlenfaserverstärkten Kunststoff.

Die Kopplungseinrichtungen verfügen über Mittel, mit denen sich die jeweilige Kopplungseinrichtung selektiv an die Schubstange koppeln lässt. Die Kopplung erfolgt vorzugsweise kraft- und/oder formschlüssig, wobei die Kopplungseinrichtungen über entsprechende Mittel verfügen, um eine kraft- und/oder formschlüssige Verbindung mit der Schubstange einzugehen. Alternativ kann die Kopplung jedoch auch mittels Magnetkraft erfolgen, zum Beispiel über einen Elektromagneten.

Durch Koppeln mit der Schubstange kann ein Träger somit durch diese entlang der mindestens einen Linearführung bewegt werden. Durch selektives Abkoppeln eines Trägers von der Schubstange kann dieser an einer bestimmten Position entlang der mindestens einen Linearführung positioniert werden, ohne durch weitere Bewegungen der Schubstange selbst bewegt zu werden. Ein derartiges selektives System kann beispielsweise verwendet werden, um den Abstand zwischen den mindestens zwei Trägern zu verändern oder je nach Bearbeitung des Bandmaterials einer oder mehrere Träger, welche nicht eingesetzt werden müssen, insbesondere unbeweglich an einer Parkposition stehen zu lassen.

Die Steuerung verfügt vorzugsweise über mindestens einen Mikrocontroller oder Mikroprozessor. Ferner verfügt die Steuerung vorzugsweise über einen nicht-flüchtigen Speicher sowie Eingabe- und Ausgabemittel, z.B. in der Form eines Touchscreens. Die Steuerung ist vorzugsweise über mindestens eine Datenverbindung, beispielsweise einer Datenkabelverbindung oder eine kabellosen Datenverbindung mit den Kopplungseinrichtungen der mindestens zwei Träger verbunden, so dass mittels der Steuerung jeder Träger selektiv durch die auf diesem angeordnete Kopplungseinrichtung mit der Schubstange gekoppelt oder von dieser entkoppelt werden kann.

Die Steuerung ist weiter bevorzugt mit dem Antrieb der Schubstange sowie mit den Bearbeitungswerkzeugen verbunden. Dadurch kann mittels der Steuerung die Bewegung der Schubstange sowie die Funktion der Bearbeitungswerkzeuge gesteuert werden.

Zum Verändern eines Abstandes zwischen den mindestens zwei Trägern kann ein erster der Träger mit der Schubstange gekoppelt werden, während der mindestens eine weitere Träger von der Schubstange entkoppelt ist. Durch eine entsprechende Bewegung der Schubstange in eine der beiden Richtungen um eine vorbestimmte Distanz kann somit der Abstand zwischen dem ersten Träger sowie einem zu diesem benachbarten Träger einfach und automatisch verändert werden. Sofern die Vorrichtung über mehr als zwei Träger verfügt, kann ein Abstand jedes Trägers zu einem benachbarten Träger auf die beschriebene Art verändert werden. Mit der Veränderung des Abstandes der mindestens zwei Träger zueinander wird natürlich auch der Abstand der auf den Trägern angeordneten Bearbeitungswerkzeuge verändert.

Eine Veränderung des Abstandes kann beispielsweise dann nötig werden, wenn bei der Verwendung der Vorrichtung zum Schneiden von Formteilen aus einem Bandmaterial Formteile mit einer unterschiedlichen Grösse und/oder Form ausgestanzt werden sollen. Durch die Veränderung des Abstandes kann eine Überschneidung der ausgestanzten Formteile auf dem Bandmaterial oder ein zu hoher Ausschuss des nach dem Schneiden der Formteile übrigbleibenden Bandmaterials vermieden werden.

Durch Koppeln aller Träger an die Schubstange können diese alle gemeinsam mittels der Schubstange bewegt werden. Dadurch lassen sich beispielsweise die Träger periodisch um eine bestimmte Strecke, insbesondere nach jedem Bearbeitungstakt, bewegen. Vorzugsweise erfolgt die Bewegung jeweils abwechselnd in jeweils eine der einander entgegengesetzte Richtungen. Dadurch kann beispielsweise beim Schneiden von Formteilen, z. B. kreisrunden Formteilen, eine optimale Ausnutzung des Materials erzielt werden, wenn die Bearbeitungswerkzeuge bzw. deren Träger jeweils zum vorgängigen Arbeitstakt um mindestens den halben Durchmesser der kreisrunden Formteile verschoben werden.

Vorzugsweise verfügen die Kopplungseinrichtungen der mindestens zwei Träger über eine Stangenklemmung, insbesondere über eine pneumatische, magnetische, elektrische oder federbelastete Stangenklemmung, welche jeweils selektiv mit der Schubstange zusammenwirken.

Dabei werden die Träger durch eine Klemmkraft, das heisst durch Kraftschluss mit der Schubstange gekoppelt. Die Stangenklemmung weist vorzugsweise eine Öffnung auf, durch welche die Schubstange durchgeschoben ist, wobei im Bereich der Öffnung mindestens ein Klemmelement angeordnet ist, welches in einen ausgefahrenen Zustand gebracht werden kann, wo dieses gegen die Schubstange drückt, um die Schubstange mit der Stangenklemmung in Kraftschluss zu bringen. Das mindestens eine Klemmelement ist vorzugsweise durch ein Federelement in einen eingefahrenen Zustand vorgespannt, in welchem das mindestens eine Klemmelement nicht mit der Schubstange zusammenwirkt, d.h. nicht auf diese gedrückt wird. Das mindestens eine Klemmelement wird insbesondere durch einen Aktor, vorzugsweise durch einen Pneumatikzylinder vom eingefahrenen Zustand in den ausgefahrenen Zustand bewegt.

Das mindestens eine Klemmelement besteht aus oder umfasst auf einer zur Schubstange gerichteten Oberfläche ein Material mit einem hohen Haftreibungskoeffizienten, beispielsweise Gummi, um eine möglichst rutschsichere Kopplung mit der Schubstange zu gewährleisten.

Die Schubstange ist vorzugsweise mit einem Ende mit einem Wagen verbunden, der über einen elektrischen oder elektromechanischen Antrieb linear entlang einer Achse, die parallel zur mindestens einen Linearführung verläuft, in zwei Richtungen bewegbar ist.

Dadurch wird ein einfach aufgebauter, zuverlässiger und mechanisch belastbarer Antrieb für die Schubstange geschaffen. Der Wagen bewegt sich in einem definierten Bewegungsbereich, der sich insbesondere seitlich in einer gedachten Verlängerung der Ausdehnungsachse der mindestens einen Linearführung auf dem Gestell der Vorrichtung liegt, und läuft vorzugsweise mittels Rollen auf mindestens einer Führungsschiene oder in mindestens einer Führungsnut.

Der Antrieb kann sich direkt auf dem Wagen befinden. Vorzugsweise ist der Antrieb jedoch auf dem Gestell der Vorrichtung angeordnet und über ein Antriebsglied, beispielsweise einer Kette, mit dem Wagen wirkverbunden. Der Antrieb oder der Wagen verfügt vorzugsweise über Mittel, mit denen sich die Position des Wagens entlang mindestens einer Führungsschiene oder Führungsnut bestimmen lässt. Der Antrieb des Wagen kann hierzu beispielsweise einen Schrittmotor oder Servomotor umfassen oder eine Rolle des Wagens über eine Drehgeberscheibe verfügen, mit welcher der Drehwinkel der Rolle gemessen werden kann. Alternativ können auch Sensoren vorhanden sein, mit denen die relative Position des Wagens zum Sensor gemessen werden kann, z.B. ein Ultraschallsensor.

Vorzugsweis ist die Schubstange an ihrem zweiten Ende ebenfalls auf einem Wagen angeordnet. Alternativ kann die Schubstange am zweiten Ende jedoch auch in einem Gleit- oder Wälzlager geführt sein.

Der Antrieb des Wagens ist vorzugsweise mittels einer Leitung mit der Steuerung verbunden und wird von dieser gesteuert. Auch ein allfällig vorhandener Sensor für die Drehgeberscheibe oder einen anderweitigen Sensor, mit welchem die Position des Wagens gemessen werden kann sind vorzugsweise mit der Steuerung verbunden.

Vorzugsweise ist der Wagen über einen Zahnriemen, der mit einem Abtrieb eines Elektromotors, insbesondere eines Servomotors verbunden ist, oder durch einen Linearmotor bewegbar. Dadurch ist eine sichere und schlupffreie Verbindung zwischen Antrieb und Wagen möglich.

Der Zahnriemen läuft vorzugsweise über ein Umlenkrolle, welche zugleich am Ende des Bewegungsbereichs des Wagens, das heisst am einen Ende der mindestens einen Führungsschiene oder Führungsnut angeordnet ist. Eine Befestigung der Umlenkrolle am Gestell bildet dabei einen Anschlag für den Wagen. Die Umlenkrolle ist vorzugsweise zwischen dem Bewegungsbereich des Wagens und der mindestens einen Linearführung am Gestell angeordnet. Die Umlenkrolle bzw. deren Befestigung bildet vorzugsweise einen Anschlag für die mindestens zwei Träger. Am anderen Ende des Bewegungsbereichs des Wagens ist vorzugsweise der Elektromotor angeordnet.

Der Zahnriemen ist vorzugsweise fest mit dem Wagen verbunden, beispielsweise durch eine Schraub- oder Klemmverbindung.

Entlang der mindestens einen Linearführung ist vorzugsweise mindestens ein Verriegelungselement an einer definierten Position angeordnet, der mit einem Positionierelement eines der mindestens zwei Träger zusammenwirkt, um diesen an der definierten Position zu verriegeln.

Dadurch kann mindestens einer der mindestens zwei Träger bewegungsfest an der definierten Position verriegelt werden. Das mindestens eine Verriegelungselement kann an der mindestens einen Linearführung oder am Gestell der Vorrichtung befestigt sein. Vorzugsweise verfügt die Vorrichtung jeweils über ein Verriegelungselement für jeden Träger. Vorzugsweise ist das mindestens eine Verriegelungselement an einer Parkposition mindestens eines der mindestens zwei Träger entlang der mindestens einen Linearführung angeordnet. Dadurch kann dieser Träger an der Parkposition verriegelt werden, z.B. wenn weniger Bearbeitungswerkzeuge als vorhanden für die Bearbeitung des Materials benötigt werden.

Vorzugsweise wirken das mindestens eine Verriegelungselement sowie das Positionierelement formschlüssig zusammen. Alternativ können Verriegelungselement und Positionierelement jedoch auch mittels Magnetkraft zusammenwirken, beispielsweise durch einen Elektromagneten.

Vorzugsweise verfügt das mindestens eine Verriegelungselement über einen Positionierstift, der aus einem eingefahrenen Zustand in einen ausgefahrenen Zustand verschiebbar ist, in welchem der Positionierstift in das Positionierelement mindestens eines Trägers eingreift.

Dadurch ist eine sichere und präzise, jedoch einfach aufgebaute Verriegelung von Verriegelungselement und Positionierelement möglich. Das Positionierelement verfügt vorzugsweise über eine zylindrische Aufnahme für den Positionierstift. Die zylindrische Aufnahme verfügt vorzugsweise über eine kegelförmige Öffnung, so dass der Positionierstift beim Verfahren in den ausgefahrenen Zustand auch dann in die Öffnung geleitet wird, wenn sich der Träger bzw. das daran angeordnete Positionierelement nicht ganz präzise an der definierten Position befindet.

Vorzugsweise ist der mindestens eine Positionierstift mittels eines Federelements im eingefahrenen Zustand vorgespannt und kann mittels eine Aktuators, insbesondere eines pneumatischen Aktuators, selektiv in den ausgefahrenen Zustand bewegt werden kann.

Dadurch wird sichergestellt, dass der Betrieb der Vorrichtung nicht durch einen im ausgefahrenen Zustand blockierten Positionierstift gestört wird. Das korrekte Verfahren des Positionierstiftes in den eingefahrenen und/oder ausgefahrenen Zustand kann vorzugsweise durch einen Sensor überwacht werden.

Die mindestens zwei Träger verfügen jeweils über mindestens einen Schlitten, welcher verschiebbar auf der mindestens einen Linearführung angeordnet ist. Der mindestens eine Schlitten weist vorzugsweise mindestens ein Gleitlager, mindestens eine Rolle oder mindestens ein Rad auf, welche(s) auf der Linearführung läuft. Vorzugsweise verfügen die mindestens zwei Träger jeweils über dieselbe Anzahl an Schlitten wie die Anzahl der Linearführungen der Vorrichtung.

Das mindestens eine Gleitlager des mindestens einen Schlittens gleitet vorzugsweise auf einem Gleitlager oder einer Fläche der mindestens einen Linearführung. Die Linearführung verfügt in diesem Fall vorzugsweise über seitliche Führungen für den mindestens einen Schlitten oder dem mindestens einen Gleitlager. Falls der mindestens eine Schlitten über mindestens eine Rolle oder über mindestens ein Rad verfügt, so läuft dieses vorzugsweise in mindestens einer Führungsnut oder auf mindestens einer Führungsschiene der mindestens einen Linearführung.

Vorzugsweise verfügen die mindestens zwei Träger jeweils über mindestens ein Bearbeitungswerkzeug zum Schneiden und/oder dreidimensionalen Formens eines Bandmaterials.

Die mindestens zwei Träger weisen vorzugsweise dieselben Bearbeitungswerkzeuge auf, so dass mittels der an den mindestens zwei Trägern angeordneten Bearbeitungswerkzeuge am Material parallel dieselben Arbeitsschritte pro Arbeitstakt durchgeführt werden können.

Vorzugsweise umfassen die mindestens zwei Träger jeweils folgendes:
a) einen ersten Arm mit einem ersten Ende und einem zweiten Ende;
b) einen ersten Befestigungsbereich für ein oberes Bearbeitungswerkzeug, wobei die erste Befestigung im Bereich des ersten Endes des ersten Armes angeordnet ist;
c) einen zweiten Arm, der parallel zum ersten Arm und zu diesem in einem ersten Abstand angeordnet ist, wobei der zweite Arm ein drittes und ein viertes Ende aufweist;
d) einen zweiten Befestigungsbereich für ein unteres Bearbeitungswerkzeug, wobei die zweite Befestigung im Bereich des dritten Endes des zweiten Armes angeordnet ist, derart, dass das obere Bearbeitungswerkzeug und das untere Bearbeitungswerkzeug zusammenwirken können, um ein zwischen dem ersten Arm und dem zweiten Arm verlaufendes Materialband zu bearbeiten;
e) einen Verbindungsarm, welcher mit dem zweiten Ende des ersten Armes sowie mit dem vierten Ende des zweiten Armes verbunden ist;
f) einen ersten Schlitten und einen zweiten Schlitten, mit welchen der Träger auf zwei Linearführungen beweglich angeordnet werden kann, wobei der erste Schlitten am ersten Arm und der zweite Schlitten am zweiten Arm angeordnet sind.

Bei dieser Ausführungsform der mindestens zwei Träger verfügt die Vorrichtung über zwei parallele Linearführungen, welche im ersten Abstand zueinander angeordnet sind. Der erste Abstand erstreckt sich vorzugsweise bei der bestimmungsgemässen Verwendung der Vorrichtung in der vertikalen Richtung. Ferner sind die zwei Linearführungen bei dieser Ausführungsform bei der bestimmungsgemässen Verwendung der Vorrichtung in horizontaler Richtung zueinander in einem zweiten Abstand zueinander versetzt angeordnet.

Vorzugsweise verfügt die Vorrichtung über Fördermittel, um ein Bandmaterial den Bearbeitungswerkzeugen zuzuführen.

Die Fördermittel können je nach Art des mit der Vorrichtung zu bearbeitenden Bandmaterials anders ausgestaltet sein. Vorzugsweise verfügt das Fördermittel über mindestens eine angetriebene Rolle oder Walze, auf welcher das Bandmaterial aufliegt. Möglich sind auch Rollen- oder Walzenpaare, zwischen denen das Bandmaterial durchläuft. Weiter bevorzugt kann die Vorrichtung auch über ein Förderband oder ein Rollenband verfügen, auf welchem das Bandmaterial aufliegt. Alternativ bevorzugt kann die Vorrichtung jedoch auch über Vakuumbänder verfügen, mit denen sich das Bandmaterial fördern lässt.

Die Vorrichtung kann vorzugsweise über eine Aufhängung verfügen, an welcher eine Rolle des Bandmaterials angebracht werden kann, wobei das Bandmaterial von der Rolle abgewickelt und den Bearbeitungswerkzeugen zugeführt wird.

Sofern die mindestens zwei Träger einen ersten Arm, einen zweiten Arm sowie einen Verbindungsarm gemäss weiter vorne stehender Beschreibung umfassen, sind die Fördermittel derart ausgestaltet, dass das Bandmaterial in Erstreckungsrichtung des ersten und zweiten Arms und in Richtung des Verbindungsarmes den Bearbeitungswerkzeugen zugeführt wird. Bei dieser Ausführungsform verfügt die Vorrichtung vorzugsweise über mindestens ein Schneidelement, mit welchem das Bandmaterial nach jedem Bearbeitungstakt bzw. nach einer bestimmten Anzahl an Bearbeitungstakten abgelängt werden kann, so dass das Bandmaterial nicht auf die Verbindungsarme der mindestens zwei Träger aufläuft.

Die Fördermittel sind ferner konfiguriert, um das Bandmaterial nach jedem Bearbeitungstakt um eine bestimmte Distanz zu fördern, so dass beim folgenden Bearbeitungstakt unbearbeitetes Bandmaterial zur Verfügung steht.

Falls mittels der Vorrichtung kreisrunde Formteile aus dem Bandmaterial gestanzt werden, wird durch das Fördermittel nach einem Bearbeitungstakt das Bandmaterial mindestens um den halben Durchmesser der kreisrunden Formteile bewegt.

Die vorliegende Erfindung bezieht sich ferner auf ein Verfahren zum Bearbeiten, insbesondere zum Schneiden und/oder dreidimensionalen Formens eines Bandmaterials mit einer Vorrichtung gemäss oben stehender Beschreibung. Die mindestens zwei Träger werden nach jedem Bearbeitungstakt des Bandmaterials durch die Bearbeitungswerkzeuge gemeinsam mittels der Schubstange abwechselnd in eine erste Richtung und in eine zweite, der ersten Richtung entgegengesetzten Richtung um eine erste Distanz bewegt.

Wie bereits beschrieben, umfasst ein Bearbeitungstakt alle Bearbeitungsschritte, die nötig sind um z.B. ein Formteil aus dem Bandmaterial herzustellen, also beispielsweise ausschneiden des Formteils sowie ein allfällig nachgeordneter Tiefziehschritt. Vorzugsweise werden nach jedem Bearbeitungstakt alle Träger der Vorrichtung gemeinsam bewegt, wobei hierzu alle Träger mittels ihrer jeweiligen Kopplungseinrichtung mit der Schubstange gekoppelt sind.

Die Bewegung nach jedem Bearbeitungstakt erlaubt eine besonders vorteilhafte Ausnutzung des Bandmaterials, da bei jedem Bearbeitungstakt die Bearbeitungswerkzeuge von ihrer im vorgängigen Bearbeitungstakt eingenommenen Position versetzt sind. Vorzugsweise wird das Bandmaterial bei jedem Bearbeitungstakt mit den Bearbeitungswerkzeugen aller Träger bearbeitet. Alternativ kann jedoch auch bei jedem zweiten Bearbeitungstakt das mindestens eine Bearbeitungswerkzeug mindestens eines Trägers das Bandmaterial nicht bearbeiten. Dadurch kann durch das Verfahren auch Bandmaterial bearbeitet werden, welches nicht breit genug ist, um bei um die erste Distanz versetzten Trägern durch die Bearbeitungswerkzeuge aller Träger bearbeitet zu werden.

Vorzugsweise werden kreisrunde Formteile aus dem Bandmaterial gestanzt und die mindestens zwei Träger werden nach jedem Stanzvorgang bewegt, wobei die erste Distanz mindestens dem halben Durchmesser der kreisrunden Formteile entspricht. Das Bandmaterial wird vorzugsweise nach jedem Bearbeitungstakt um eine zweite Distanz, die mindestens dem halben Durchmesser der kreisrunden Formteile entspricht, durch Fördermittel bewegt.

Durch die abwechselnde Bewegung der Träger sowie dem Bewegen des Bandmaterials nach jedem Bearbeitungstankt wird eine besonders gute Ausnutzung des Bandmaterials erzielt. Dadurch muss nur wenig überschüssiges Bandmaterial als Ausschuss entsorgt werden.

Vorzugsweise wird vor der Bearbeitung des Bandmaterials der Abstand zwischen den mindestens zwei Trägern durch die folgenden Schritte verändert:
a) Lösen aller Kopplungseinrichtungen und bewegen der Schubstange in die erste Richtung von einer Grundposition in eine Endposition;
b) Koppeln der Schubstange mit einem ersten Träger, welcher sich am weitesten von einem Anschlagelement der mindestens einen Linearführung befindet;
c) Bewegen der Schubstange und des mit der Schubstange gekoppelten ersten Trägers in die zweite Richtung bis ein Träger, der am nächsten zu einem Anschlagelement liegt, am Anschlagelement anschlägt;
d) Entkoppeln des ersten Trägers von der Schubstange;
e) Bewegen der Schubstange in die zweite Richtung zur Grundposition;
f) Koppeln des ersten Trägers an die Schubstange und bewegen der Schubstange und des daran gekoppelten ersten Trägers in die erste Richtung um eine vordefinierte Distanz;
g) sequenzielles Koppeln eines Trägers, der dem durch die vorgängige Bewegung der Schubstange bewegten Träges benachbart ist, an die Schubstange und Bewegen derselben um die vordefinierte Distanz in die erste Richtung.

Dies ermöglicht eine möglichst einfache, jedoch präzise Veränderung des Abstandes zwischen den mindestens zwei Trägern. Durch die Veränderung des Abstandes kann die Vorrichtung zum Bearbeiten eines Bandmaterials mit unterschiedlichen Bearbeitungswerkzeugen verwendet werden. Hierzu können die an den mindestens zwei Trägern angebrachte Bearbeitungswerkzeuge oder Bestandteile davon ausgewechselt werden. Sind beispielsweise an den mindestens zwei Trägern Stanzwerkzeuge angebracht, so kann bei einem Auswechseln der Stanzmatrizen der Abstand zwischen den Trägern entsprechend der Grösse der ausgewechselten Stanzmatrizen eingestellt werden.

Vorzugsweise wird beim Verändern des Abstandes zwischen den mindestens zwei Trägern der Abstand zwischen allen Trägern gleich eingestellt. Alternativ kann jedoch der Abstand zwischen jeweils zwei benachbarten Trägern unterschiedlich eingestellt werden.

Vorzugsweise wird der Schritt g) durchgeführt, bis der Träger bewegt wurde, der dem dem Anschlagelement nächstliegenden Träger benachbart ist. Das heisst, dass das dem Anschlagelement nächstliegender Träger beim Verändern des Abstandes der mindestens zwei Träger nicht bewegt wird. Dadurch kann die Veränderung des Abstandes schneller durchgeführt werden, als wenn hierzu alle Träger bewegt werden.

Vorzugsweise werden zwischen den Schritten d) und e) alle Träger jeweils mittels Eingriffs eines Verriegelungselements in Positionierelemente der Träger in ihrer Position verriegelt, wobei vor dem Bewegen der Schubstange im Schritt f) beziehungsweise im Schritt g) der Positionierstift des jeweils zu bewegenden Trägers eingefahren wird, um den jeweiligen Träger zu entriegeln.

Dadurch wird sichergestellt, dass Träger, welche nicht bewegt werden sollen, sicher in ihrer Position verbleiben. Dadurch kann die Präzision beim Verstellen des Abstandes verbessert werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung einer ersten Ausführungsform einer erfindungsgemässen Vorrichtung;
- Fig. 2 - Fig.6: unterschiedliche Schritte beim Verstellen des Abstandes zwischen den Trägern einer erfindungsgemässen Vorrichtung;
- Fig. 7: ein Bandmaterial, welches mit einem erfindungsgemässen Verfahren teilweise bearbeitet wurde;
- Fig. 8: ein Bandmaterial, welches mit einem zum Verfahren gemäss Fig. 7 alternativen Verfahren teilweise bearbeitet wurde;
- Fig. 9: eine zweite Ausführungsform einer erfindungsgemässen Vorrichtung;
- Fig. 10: eine Ausführungsform eines Trägers;
- Fig. 11: das Zusammenwirken einer Ausführungsform eines Positionierelements mit einem Verriegelungselement.

Grundsätzlich sind in den Figuren gleiche Teile mit gleichen Bezugszeichen versehen.

### Wege zur Ausführung der Erfindung

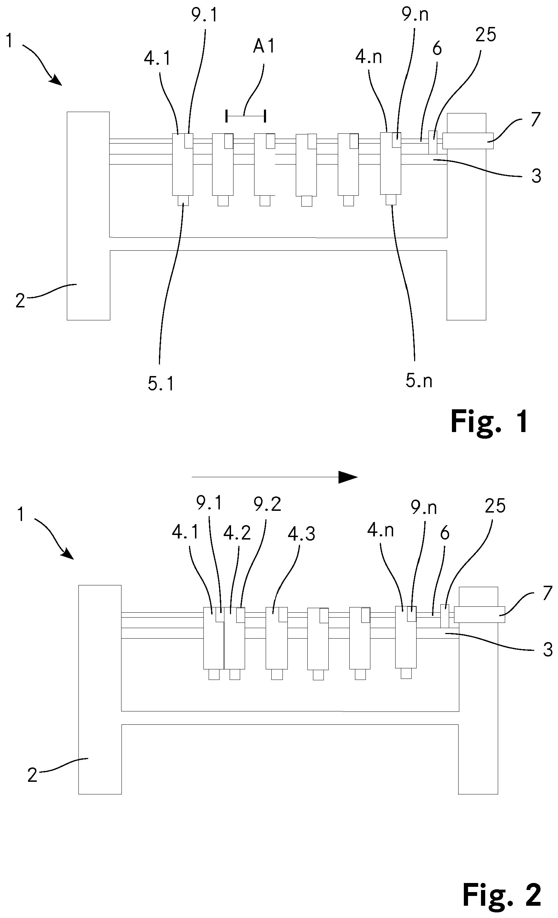

Die Fig. 1 zeigt eine schematische Darstellung einer ersten Ausführungsform einer erfindungsgemässen Vorrichtung 1. Die Vorrichtung 1 umfasst ein Gestell 2, mit welchem die Vorrichtung 1 auf einem Boden gestellt werden kann und auf welchem die Komponenten der Vorrichtung 1 angeordnet sind. Die Vorrichtung 1 weist ferner eine Linearführung 3 auf, auf welcher mehrere Träger 4.1 - 4.n beweglich angeordnet sind. An den Trägern 4.1 - 4.n ist jeweils ein Bearbeitungswerkzeug 5.1 - 5.n befestigt. Mittels der Bearbeitungswerkzeuge 5.1 - 5.n kann ein Material, insbesondere ein Bandmaterial bearbeitet werden. Die Vorrichtung 1 weist ferner eine Schubstange 6 auf, welche parallel zur Linearführung 3 angeordnet ist. Die Schubstange 6 ist in zwei Richtungen beweglich gelagert und wird durch einen Antrieb 7 in Bewegung versetzt. Jeder Träger 4.1 - 4.n verfügt über eine Kopplungseinrichtung 9.1 - 9.n. Mittels der Kopplungseinrichtung 9.1 - 9.n lässt sich jeder Träger 4.1 - 4.n selektiv mit der Schubstange 6 koppeln. Im gekoppelten Zustand wird der jeweilige Träger 4.1 - 4.n durch die Schubstange 6 entlang der Linearführung 3 bewegt. Die Vorrichtung 1 weist ferner ein Anschlagelement 25 auf, welches die Bewegung der Träger 4.1 - 4.n beschränkt. Auf der Fig. 1 sind die Träger 4.1 - 4.n ein einem ersten Abstand A1 zueinander angeordnet.

Die Fig. 2 zeigt einen ersten Schritt des erfindungsgemässen Verfahrens zum Verändern des Abstandes der Träger 4.1 - 4.n, welche auf der Fig. 2 in einem ersten Abstand A1 zueinander angeordnet sind. In diesem Schritt werden zunächst alle Kopplungseinrichtungen 9.1 - 9.n gelöst und die Schubstange 6 wird in eine erste Richtung, welche dem auf Fig. 2 gezeigten Pfeil entgegengesetzt ist, in eine Endposition bewegt.

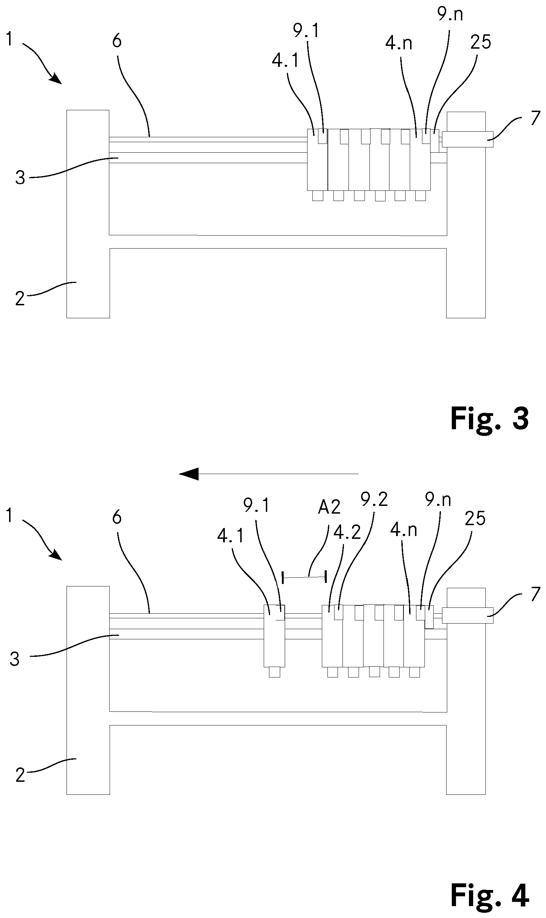

Anschliessend wird ein erster Träger 4.1, der vom Anschlagelement 25 am weitesten entfernt ist, mittels seiner Kopplungseinrichtung 9.1 mit der Schubstange 6 gekoppelt. Die Schubstange wird durch den Antrieb 7 in eine zweite Richtung, die der ersten Richtung entgegengesetzt ist und durch den Pfeil auf der Fig. 2 symbolisiert wird, bewegt. Durch diese Bewegung fährt der erste Träger 4.1 auf einen ihm benachbarten zweiten Träger 4.2 auf und zieht diesen dann in die zweite Richtung mit. Der zweite Träger 4.2 fährt anschliessend auf einen weiteren ihm benachbarten Träger 4.3 auf und so weiter. Schlussendlich fährt der Trägerzug auf den dem Anschlagelement 25 am nächsten liegenden Träger 9.n auf und zieht diese mit, bis dieser auf das Anschlagelement 25 auffährt, wie dies auf der Fig. 3 gezeigt wird.

Die Kopplungseinrichtung 9.1 des ersten Trägers 4.1 wird von der Schubstange 3 entkoppelt und die Schubstange 3 wird in die zweite Richtung in eine Grundposition gefahren. Danach wird der erste Träger 4.1 mittels seiner Kopplungseinrichtung 9.1 wieder mit der Schubstange 3 gekoppelt und die Schubstange 3 mit daran gekoppelten ersten Träger 4.1 wird durch den Antrieb 7 in die erste Richtung um eine vordefinierte Distanz A2 bewegt, wie dies auf der Fig. 4 gezeigt ist. Die vordefinierte Distanz A2 entspricht hierbei dem neu einzustellenden Abstand der Träger 4.1 - 4.n. Anschliessend wird der dem ersten Träger 4.1 benachbarte Träger 4.2 mittels seiner Kopplungseinrichtung 9.2 mit der Schubstange 6 gekoppelt und die Schubstange mit daran gekoppeltem ersten Träger 4.1 und zweitem Träger 4.2 um die vordefinierte Distanz A2 in die erste Richtung bewegt.

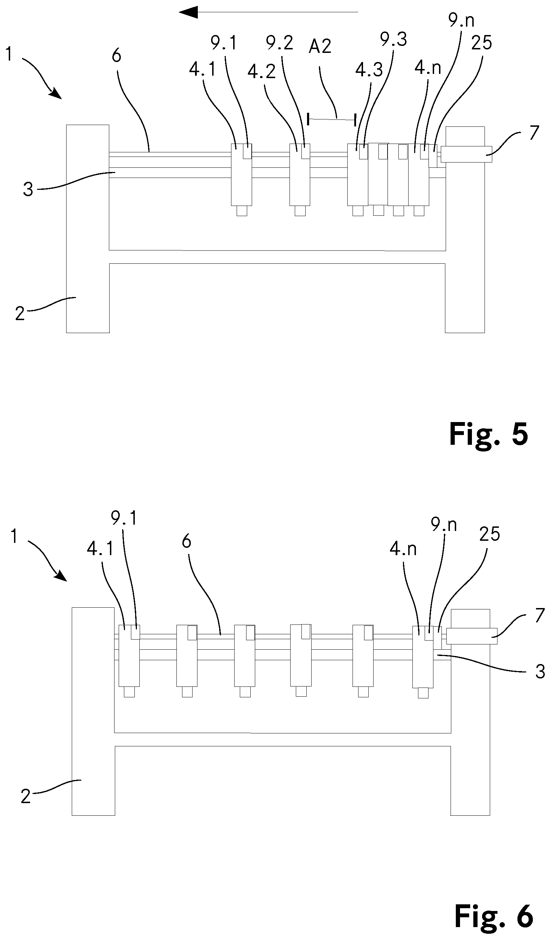

Die verbleibenden Träger 4.3 - 4.n werden sequentiell jeweils nach der Bewegung der Schubstange um die vordinierte Distanz A2 über die entsprechende Kopplungseinrichtung 9.3 - 9.n mit der Schubstange gekoppelt und diese anschliessend wiederum um die zweite Distanz A2 in die erste Richtung bewegt, wie dies auf der Fig. 5 dargestellt ist. Dieses sequentielle Koppeln und Bewegen wird solange wiederholt, bis alle Träger 4.1 - 4.n voneinander um die vordefinierte Distanz A2 voneinander beabstandet sind. Dabei muss der dem Anschlagelement 25 am nächsten liegende Träger 4.n nicht bewegt werden, sondern kann, wie auf der Fig. 6 gezeigt, an seiner Position verbleiben. Durch Koppeln aller Kopplungseinrichtungen 9.1 - 9.n können anschliessend mittels der Schubstange 6 aller Träger 4.1 - 4.n gleichzeitig bewegt werden.

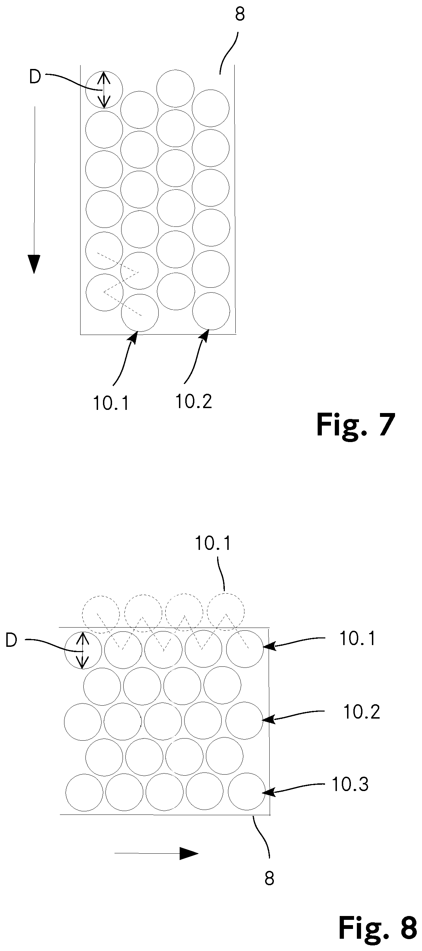

Die Fig. 7 zeigt ein Bandmaterial 8, welches mit einer erfindungsgemässen Vorrichtung 1 teilweise bearbeitet wurde. Die Bearbeitungswerkzeuge 5.1 - 5.n der der Träger 4.1 - 4.n sind bei dieser Ausführungsform Stanzwerkzeuge, mit denen kreisrunde Formteile aus dem Bandmaterial ausgestanzt werden. Die nebeneinander angeordneten Bearbeitungswerkzeuge 5.1 - 5.n schneiden hierbei jeweils Reihen 10.1 - 10.2 von kreisrunden Formteilen aus dem Bandmaterial 8. Die kreisrunden Formteile weisen alle denselben Durchmesser D auf. Die Träger 4.1 - 4.n sind bei der Bearbeitung des Bandmaterials 8 alle im selben Abstand zueinander angeordnet. Nach jedem Bearbeitungstakt werden alle Träger 4.1 - 4.n abwechselnd in die erste sowie die zweite Richtung um eine definierte erste Distanz bewegt, welche etwas grösser als der halbe Durchmesser D der kreisrunden Formteile ist. Zudem wird das Bandmaterial 8 in Betrachtungsrichtung nach links um eine zweite Distanz, welche ebenfalls etwas grösser als der halbe Durchmesser D der kreisrunden Formteile ist.

Durch das abwechselnde Versetzen der Träger 4.1 - 4.n in die erste und zweite Richtung um die erste Distanz nach jedem Bearbeitungstakt sowie der gleichzeitigen Bewegung des Bandmaterials 8 können die kreisrunden Formteile versetzt zueinander in einer materialsparenden Art und Weise aus dem Bandmaterial 8 gestanzt werden. Die Versetzung ist besonders gut anhand der gestrichelten Linie, die die Verschiebung des Zentrums des untersten kreisrunden Formteils nachzeichnet, zu erkennen.

Die erste Distanz und die zweite Distanz betragen jeweils mehr als der halbe Durchmesser D der kreisrunden Formteile, damit sichergestellt werden kann, dass es zu keinen Überlappungen der Formteile kommt.

Die Fig. 8 illustriert ein Bandmaterial 8, welches mit einem zum Verfahren gemäss Fig. 7 alternativen Verfahren teilweise bearbeitet wurde. Bei diesem Verfahren wird bei jedem zweiten Bearbeitungstakt das mindestens eine Bearbeitungswerkzeug 5.1 einer der äusserten Träger 4.1 nicht verwendet. Dadurch wird bei jedem zweiten Arbeitstakt ein kreisrundes Formteil einer Reihe 10.1 weniger hergestellt. Dies ermöglicht die Verwendung des erfindungsgemässen Verfahrens mit Bandmaterial 8, welches über keine genügend grosse Breite verfügt, um für jede der Reihen 10.1 - 10.3 die gleiche Anzahl an kreisrunden Formteilen ausschneiden zu können.

Für einen Fachmann ist klar, dass die Anzahl der Träger 4.1 - 4.n für das offenbarte Verfahren je nach Breite des Bandmaterials 8 sowie der Dimension des mindestens einen Bearbeitungswerkzeugs 5.1 - 5.n variieren kann. Auch können beim Verfahren auch die Bearbeitungswerkzeuge 5 von mehr als nur einem Träger 4.1 - 4.n bei einem Bearbeitungstakt nicht verwendet werden. Es ist auch anzumerken, dass je nach Breite des Bandmaterials 8 einer oder mehrere Träger 4.1 - 4.n in einer Parkposition verbleiben können und nicht mit der Schubstange 6 bewegt werden. Auch können andere Bearbeitungen des Bandmaterials 8 mit dem offenbarten Verfahren durchgeführt werden, z.B. dreidimensionales Formen oder Prägen.

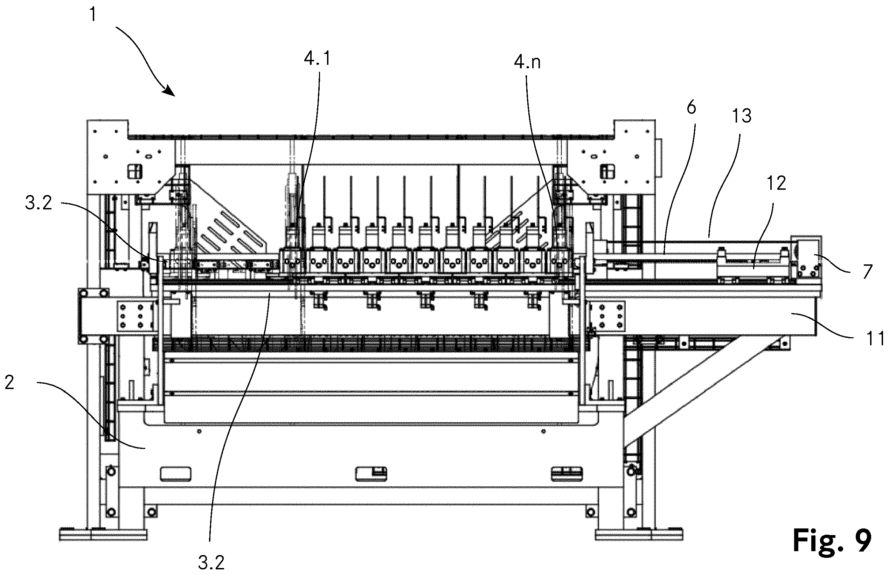

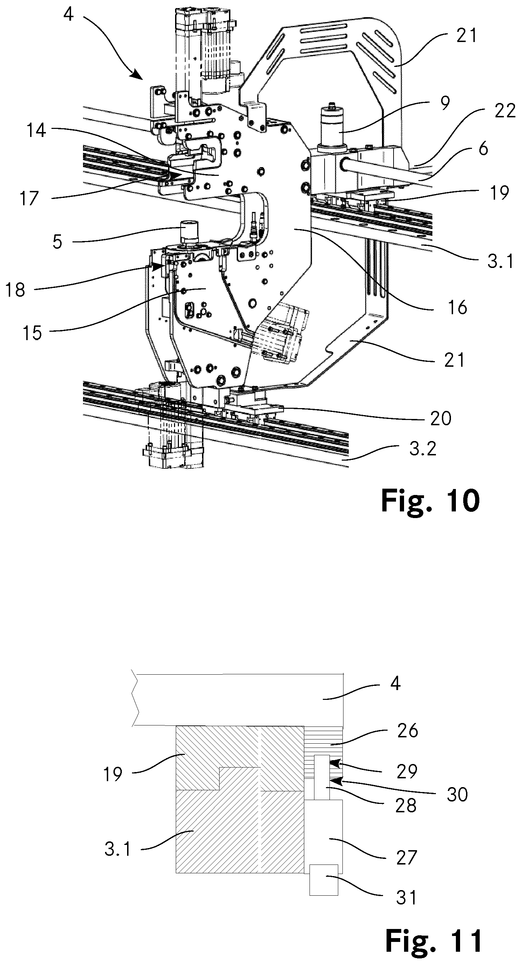

Die Fig. 9 zeigt eine zweite Ausführungsform einer erfindungsgemässen Vorrichtung 1. Die Vorrichtung 1 verfügt über ein Gestell 2 mit welchem die Vorrichtung 1 auf dem Boden steht und an welchem die einzelnen Komponenten der Vorrichtung 1 angebracht sind. Die Vorrichtung 1 umfasst ferner zwei parallel zueinander angeordnete und im ersten Abstand zueinander stehende Linearführungen 3.1, 3.2. Die Träger 4.1 - 4.n sind beweglich mittels zweier Schlitten (siehe Fig. 10) an den zwei parallelen Linearführungen 3.1, 3.2 angeordnet. Die Träger 4.1 - 4.n können mittels einer auf dem Gestell 2 der Vorrichtung 1 beweglich angeordneten und parallel zu den Linearführungen 3.1, 3.2 stehenden Schubstange 6 entlang der Linearführungen 3.1, 3.2 bewegt werden. Dabei ist jeder der einzelnen Träger 4.1 - 4.n selektiv über eine Kopplungseinrichtung mit der Schubstange 6 koppelbar. Somit kann ein einzelner, mehrere oder auch alle Träger 4.1 - 4.n durch Koppeln mit der Schubstange 6 bewegt werden. Die Schubstange 6 ist an einem Ende auf einem Wagen 12, welcher auf einem Ausleger 11 des Gestells 2 linear beweglich angeordnet ist, befestigt. Der Wagen 12 ist hierbei parallel zu den Linearführungen 3.1, 3.2 beweglich. Ein Antrieb 7, der vorzugsweise als Elektromotor ausgestaltet ist, ist über einen Zahnriemen 13 mit dem Wagen 12 verbunden, so dass der Wagen 12 mittels des Antriebs 7 hin und her bewegt werden kann. Je nach Anwendung kann die Vorrichtung 1 über eine unterschiedliche Anzahl an Trägern 4.1 - 4.n verfügen. Die Vorrichtung 1 wird vorzugsweise zum Ausschneiden und/oder dreidimensionalem Formen von Formteilen aus einem Bandmaterial eingesetzt. Dementsprechend sind an den Trägern 4.1 - 4.n Stanz- und/oder Tiefziehwerkzeuge angebracht.

Die Fig. 10 zeigt eine Ausführungsform eines Trägers 4. Der Träger 4 weist einen ersten Arm 14 mit einem ersten und einem zweiten Ende auf, wobei im Bereich des ersten Endes ein erster Befestigungsbereich 17 zum Befestigen eines oberen Bearbeitungswerkzeugs angeordnet ist. Der Träger 4 weist ferner einen zweiten Arm 15 mit einem dritten und einem vierten Ende auf, wobei im Bereich des dritten Endes ein zweiter Befestigungsbereich 18 für ein unteres Bearbeitungswerkzeug angeordnet ist. Das zweite Ende des ersten Armes 14 und das vierte Ende des zweiten Armes 15 sind über einen Verbindungsarm 16 miteinander verbunden. Der erste Arm 14 und der zweite Arm 15 verlaufen parallel zueinander und sind in einem ersten Abstand zueinander angeordnet. Der Träger 4 weist einen ersten Schlitten 19, der am ersten Arm 14 angeordnet ist, sowie eine zweiten Schlitten 20, der am zweiten Arm 15 angeordnet ist, auf. Mittels der Schlitten 14, 15 kann der Träger 4 an zwei parallelen Linearführungen, beispielsweise an den zwei Linearführungen 3.1, 3.2 der Vorrichtung 1 gemäss Fig. 9 beweglich angeordnet werden. Am Träger 4 werden vorzugsweise Bearbeitungswerkzeuge 5 zum Schneiden und/oder dreidimensionalen Formen eines Bandmaterials an den zwei Befestigungsbereichen 17, 18 angebracht. Der Träger 4 umfasst ferner noch eine Kabelführung 21, mit welcher Leitungen für Steuersignale, Strom, Druckluft oder Flüssigkeiten von einer Befestigung 22 für eine Schleppkette von oben bzw. unten zum ersten Arm 14 bzw. dem zweiten Arm 15 geführt werden können.

Die Fig. 11 zeigt das Zusammenwirken einer Ausführungsform eines Positionierelements 26 mit einem Verriegelungselement 27. Das Positionierelement 26 ist an einem Träger 4 angeordnet, während das Verriegelungselement 27 an einer Linearführung, beim der gezeigten Ausführungsform an der ersten Linearführung 3.1, angebracht ist. Alternativ kann das Verriegelungselement 27 jedoch auch an einer anderen Komponente der Vorrichtung 1, insbesondere dem Gestell 2 angebracht sein. Das Verriegelungselement 27 verfügt über einen Positionierstift 28, welcher von einem eingefahrenen Zustand (nicht gezeigt) in den gezeigten ausgefahrenen Zustand gebracht werden kann, insbesondere über einen Aktuator (nicht gezeigt). Der Positionierstift 28 greift bei der gezeigten Ausführungsform in eine Bohrung 29 des Positionierelements 26 ein. Die Bohrung 29 ist zylindrisch und verfügt über eine konische Öffnung 30, um eine automatische Zentrierung des Positionierstiftes 28 innerhalb der Bohrung 29 zu ermöglichen. Der Positionierstift 28 wird mittels eines Aktuators 30, insbesondere eines pneumatischen Aktuators linear verfahren und ist mittels eines Federelements (nicht gezeigt) innerhalb des Verriegelungselements 27 in den ausgefahrenen Zustand vorgespannt.

## Patentansprüche

1. Vorrichtung zur Bearbeitung eines Materials, insbesondere eines Bandmaterials (8) umfassend mindestens zwei Träger (4.1-4.n) mit jeweils mindestens einem Bearbeitungswerkzeug (5.1-5.n) für das Material, mindestens einer Linearführung (3), auf welcher die mindestens zwei Träger (4.1-4.n) linear verschiebbar angeordnet sind, sowie einer entlang der mindestens einen Linearführung (3) in zwei entgegengesetzten Richtungen beweglich angetriebenen Schubstange (6), wobei die mindestens zwei Träger (4.1-4.n) jeweils über eine Kopplungseinrichtung (9.1-9.n) verfügen, mit denen sich jeder der mindestens zwei Träger (4.1-4.n) selektiv mit der Schubstange (6) koppeln lässt, wobei die Vorrichtung (1) über eine Steuerung verfügt, mit welcher sich die Kopplungseinrichtungen (9.1-9.n) steuern lassen, so dass mittels der Schubstange (6) die mindestens zwei Träger (4.1-4.n) gemeinsam entlang der mindestens einen Linearführung (3) bewegt werden können oder jeweils einer oder mehrere definierte der mindestens zwei Träger (4.1-4.n), so dass sich ein Abstand zwischen den mindestens zwei Trägern (4.1-4.n) verändern lässt.

2. Vorrichtung gemäss Anspruch 1, **dadurch gekennzeichnet, dass** die Kopplungseinrichtung (9.1-9.n) der mindestens zwei Träger (4.1-4.n) über eine Stangenklemmung, insbesondere über eine pneumatische, elektrische oder magnetische Stangenklemmung verfügt, welche mit der Schubstange (6) zusammenwirkt.

3. Vorrichtung gemäss einem der Ansprüche 1 oder 2, **dadurch gekennzeichnet, dass** die Schubstange (6) mit einem Ende mit einem Wagen (12) verbunden ist, der über einen pneumatische, elektrischen oder elektromechanischen Antrieb (7) linear entlang einer Achse, die parallel zur mindestens einen Linearführung (3) verläuft, in zwei Richtungen bewegbar ist.

4. Vorrichtung gemäss Anspruch 3, **dadurch gekennzeichnet, dass** der Wagen (12) über einen Zahnriemen (13), der mit einem Abtrieb eines Elektromotors, insbesondere eines Servomotors verbunden ist, oder über einen Linearmotor bewegbar ist.

5. Vorrichtung gemäss einem der Ansprüche 1 bis 4, **dadurch gekennzeichnet, dass** entlang der mindestens einen Linearführung (3) mindestens ein Verriegelungselement (27) an einer definierten Position angeordnet ist, der mit einem Positionierelement (26) eines der mindestens zwei Träger (4.1-4.n) zusammenwirkt, um diesen an der definierten Position zu verriegeln.

6. Vorrichtung gemäss Anspruch 5, **dadurch gekennzeichnet, dass** das mindestens eine Verriegelungselement (27) über einen Positionierstift (28) verfügt, der aus einem eingefahrenen Zustand in einen ausgefahrenen Zustand verschiebbar ist, in welchem der Positionierstift (28) in das Positionierelement (26) eingreift.

7. Vorrichtung gemäss Anspruch 6, **dadurch gekennzeichnet, dass** der mindestens eine Positionierstift (28) mittels eines Federelements im eingefahrenen Zustand vorgespannt ist und mittels eine Aktuators, insbesondere eines pneumatischen Aktuators, selektiv in den ausgefahrenen Zustand bewegt werden kann.

8. Vorrichtung gemäss einem der Ansprüche 1 bis 7, **dadurch gekennzeichnet, dass** die mindestens zwei Träger (4.1-4.n) jeweils über mindestens einen Schlitten (19, 20) verfügen, welcher verschiebbar auf der mindestens einen Linearführung (3) angeordnet ist.

9. Vorrichtung gemäss einem der Ansprüche 1 bis 8, **dadurch gekennzeichnet, dass** die mindestens zwei Träger (4.1-4.n) jeweils über mindestens ein Bearbeitungswerkzeug (5.1-5.n) zum Schneiden und/oder dreidimensionalen Formen eines Bandmaterials (8) verfügen.

10. Vorrichtung gemäss einem der Ansprüche 1 bis 9, **dadurch gekennzeichnet, dass** die mindestens zwei Träger (4.1-4.n) jeweils folgendes umfassen:
a) einen ersten Arm (14) mit einem ersten Ende und einem zweiten Ende;
b) einen ersten Befestigungsbereich (17) für ein oberes Bearbeitungswerkzeug, wobei der erste Befestigungsbereich (17) im Bereich des ersten Endes des ersten Armes (14) angeordnet ist;
c) einen zweiten Arm (15), der parallel zum ersten Arm (14) und zu diesem in einem ersten Abstand angeordnet ist, wobei der zweite Arm (15) ein drittes und ein viertes Ende aufweist;
d) einen zweiten Befestigungsbereich (18) für ein unteres Bearbeitungswerkzeug, wobei der zweite Befestigungsbereich (18) im Bereich des dritten Endes des zweiten Armes (15) angeordnet ist, derart, dass das obere Bearbeitungswerkzeug und das untere Bearbeitungswerkzeug zusammenwirken können, um ein zwischen dem ersten Arm (14) und dem zweiten Arm (15) verlaufendes Materialband zu bearbeiten;
e) einen Verbindungsarm (16), welcher mit dem zweiten Ende des ersten Armes (14) sowie mit dem vierten Ende des zweiten Armes (15) verbunden ist;
f) einen ersten Schlitten (19) und einen zweiten Schlitten (20), mit welchen der Träger (4.1-4.n) auf zwei Linearführungen (3) beweglich angeordnet werden kann, wobei der erste Schlitten (19) am ersten Arm (14) und der zweite Schlitten (20) am zweiten Arm (15) angeordnet sind.

11. Vorrichtung nach einem der Ansprüche 1 bis 10, **dadurch gekennzeichnet, dass** die Vorrichtung (1) über Fördermittel verfügt, um ein Bandmaterial (8) den Bearbeitungswerkzeugen zuzuführen.

12. Verfahren zum Bearbeiten, insbesondere zum Schneiden und/oder dreidimensionalen Formens eines Bandmaterials (8), mit einer Vorrichtung (1) gemäss einem der Ansprüche 1 bis 11, **dadurch gekennzeichnet, dass** die mindestens zwei Träger (4.1-4.n) nach jedem Bearbeitungstakt des Bandmaterials (8) durch die Bearbeitungswerkzeuge gemeinsam mittels der Schubstange (6) abwechselnd in eine erste Richtung und in eine zweite, der ersten Richtung entgegengesetzten Richtung um eine erste Distanz bewegt werden.

13. Verfahren gemäss Anspruch 12, **dadurch gekennzeichnet, dass** kreisrunde Formteile aus dem Bandmaterial (8) gestanzt werden und die mindestens zwei Träger (4.1-4.n) nach jedem Bearbeitungstakt bewegt werden, wobei die erste Distanz dem halben Durchmesser der kreisrunden Formteile entspricht, und wobei vorzugsweise das Bandmaterial (8) nach jedem Bearbeitungstakt um eine zweite Distanz, die mindestens dem halben Durchmesser der kreisrunden Formteile entspricht, bewegt wird.

14. Verfahren gemäss einem der Ansprüche 12 oder 13, **dadurch gekennzeichnet, dass** vor der Bearbeitung des Bandmaterials (8) der Abstand zwischen den mindestens zwei Trägern (4.1-4.n) durch die folgenden Schritte verändert wird:
a) Lösen aller Kopplungseinrichtungen (9.1-9.n) und bewegen der Schubstange (6) in die erste Richtung von einer Grundposition in eine Endposition;
b) Koppeln der Schubstange (6) mit einem ersten Träger (4.1), welcher sich am weitesten von einem Anschlagelement (25) der mindestens einen Linearführung (3) befindet;
c) Bewegen der Schubstange (6) und des mit der Schubstange (6) gekoppelten ersten Trägers (4.1) in die zweite Richtung bis ein Träger (4.2-4.n), der am nächsten zum Anschlagelement (25) liegt, am Anschlagelement (25) anschlägt;
d) Entkoppeln des ersten Trägers (4.1) von der Schubstange (6);
e) Bewegen der Schubstange (6) in die zweite Richtung zur Grundposition;
f) Koppeln des ersten Trägers (4.1) an die Schubstange (6) und bewegen der Schubstange (6) und des daran gekoppelten ersten Trägers (4.1) in die erste Richtung um eine vordefinierte Distanz;
g) sequenzielles Koppeln eines Trägers (4.2-4.n), der dem durch die vorgängige Bewegung der Schubstange (6) bewegten Träges (4.1-4.n) benachbart ist, an die Schubstange (6) und Bewegen derselben um die vordefinierte Distanz in die erste Richtung.

15. Verfahren gemäss Anspruch 14, **dadurch gekennzeichnet, dass** der Schritt g) durchgeführt wird, bis der Träger (4.1-4.n) bewegt wurde, der dem dem Anschlagelement (25) nächstliegenden Träger (4.2-4.n) benachbart ist.

16. Verfahren gemäss einem der Ansprüche 14 oder 15, **dadurch gekennzeichnet, dass** zwischen den Schritten d) und e) alle Träger (4.1-4.n) jeweils mittels Eingriffs eines Verriegelungselements (27) in Positionierelemente (26) der Träger (4.1-4.n) in ihrer Position verriegelt werden, wobei vor dem Bewegen der Schubstange (6) im Schritt f) beziehungsweise im Schritt g) der Positionierstift (28) des jeweils zu bewegenden Trägers (4.1-4.n) eingefahren wird, um den jeweiligen Träger (4.1-4.n) zu entriegeln.

## Claims

1. Device for processing a material, in particular a strip material (8), comprising at least two carriers (4.1-4.n) each including at least one processing tool (5.1-5.n) for the material, at least one linear guide (3) on which the at least two carriers (4.1-4.n) are arranged such as to be linearly displaceable, and a push rod (6) driven so as to be movable in two opposite directions along the at least one linear guide (3), wherein the at least two carriers (4.1-4.n) each include a coupling device (9.1-9.n) by means of which each of the at least two carriers (4.1-4.n) may be selectively coupled to the push rod (6), wherein the device (1) includes a controller with which the coupling devices (9.1 -9.n) can be controlled so that the push rod (6) can be used to move the at least two carriers (4.1-4.n) together along the at least one linear guide (3) or one or more defined ones of the at least two carriers (4.1-4.n), respectively, in order to alter the distance between the at least two carriers (4.1-4.n).

2. Device according to claim 1, **characterized in that** the coupling device (9.1-9.n) of the at least two carriers (4.1-4.n) includes a rod clamp, in particular a pneumatic, electric or magnetic rod clamp, which interacts with the push rod (6).

3. Device according to one of claims 1 or 2, **characterized in that** one end of the push rod (6) is connected to a carriage (12) which can be linearly moved in two directions along an axis running parallel to the at least one linear guide (3) by means of a pneumatic, electric or electromechanical drive (7).

4. Device according to claim 3, **characterized in that** the carriage (12) can be moved by means of either a toothed belt (13) which is connected to an output of an electric motor, in particular a servomotor, or by means of a linear motor.

5. Device according to one of claims 1 to 4, **characterized in that** at least one locking element (27) is arranged at a defined position along the at least one linear guide (3), the at least one locking element (27) interacting with a positioning element (26) of one of the at least two carriers (4.1-4.n) in order to lock said one carrier (41.-4.n) at the defined position.

6. Device according to claim 5, **characterized in that** the at least one locking element (27) includes a positioning pin (28) which can be displaced from a retracted state into an extended state, in which extended state the positioning pin (28) engages with the positioning element (26).

7. Device according to claim 6, **characterized in that** the at least one positioning pin (28) is pretensioned towards the retracted state by means of a spring element and can be selectively moved into the extended state by means of an actuator, in particular by means of a pneumatic actuator.

8. Device according to one of claims 1 to 7, **characterized in that** the at least two carriers (4.1-4.n) each include at least one slide (19, 20) which is displaceably arranged on the at least one linear guide (3).

9. Device according to one of claims 1 to 8, **characterized in that** the at least two carriers (4.1-4.n) each include at least one processing tool (5.1-5.n) for cutting and/or three-dimensionally shaping a strip material (8).

10. Device according to one of claims 1 to 9, **characterized in that** the at least two carriers (4.1-4.n) each include the following:
a) a first arm (14) having a first end and a second end;
b) a first mounting area (17) for an upper processing tool, wherein the first mounting area (17) is arranged in the region of the first end of the first arm (14);
c) a second arm (15) which is arranged parallel to the first arm (14) and at a first distance therefrom, wherein the second arm (15) has a third end and a fourth end;
d) a second mounting area (18) for a lower processing tool, wherein the second mounting area (18) is arranged in the region of the third end of the second arm (15) such that the upper processing tool and the lower processing tool can cooperate in order to process a material strip running between the first arm (14) and the second arm (15);
e) a connecting arm (16) which is connected to the second end of the first arm (14) and to the fourth end of the second arm (15);
f) a first slide (19) and a second slide (20) with which the carrier (4.1-4.n) can be movably arranged on two linear guides (3), wherein the first slide (19) is arranged on the first arm (14) and the second slide (20) is arranged on the second arm (15).

11. Device according to one of claims 1 to 10, **characterized in that** the device (1) includes conveying means in order to feed a strip material (8) to the processing tools.

12. Method for processing, in particular for cutting and/or three-dimensionally shaping, a strip material (8) with a device (1) according to one of claims 1 to 11, **characterized in that** the at least two carriers (4.1-4.n) are moved after each processing cycle of the strip material (8) by the processing tools together by means of the push rod (6) alternately in a first direction and in a second direction opposite to the first direction by a first distance.

13. Method according to claim 12, **characterized in that** circular shaped parts are punched out of the strip material (8) and the at least two carriers (4.1-4.n) are moved after each processing cycle, wherein the first distance corresponds to half the diameter of the circular shaped parts, and wherein the strip material (8) is preferably moved after each processing cycle by a second distance which corresponds to at least half the diameter of the circular shaped parts.

14. Method according to one of claims 12 or 13, **characterized in that** before the processing of the strip material (8) the distance between the at least two carriers (4.1-4.n) is changed by the following steps:
a) releasing all coupling devices (9.1-9.n) and moving the push rod (6) in the first direction from a basic position into an end position;
b) coupling the push rod (6) to a first carrier (4.1) which is located furthest from a stop element (25) of the at least one linear guide (3);
c) moving the push rod (6) and the first carrier (4.1) coupled to the push rod (6) in the second direction until a carrier (4.2-4.n) which is located closest to the stop element (25) strikes the stop element (25);
d) decoupling the first carrier (4.1) from the push rod (6);
e) moving the push rod (6) in the second direction to the basic position;
f) coupling the first carrier (4.1) to the push rod (6) and moving the push rod (6) and the first carrier (4.1) coupled thereto in the first direction by a predefined distance;
g) sequentially coupling a carrier (4.2-4.n) which is adjacent to the carrier (4.1-4.n) moved by the preceding movement of the push rod (6) to the push rod (6) and moving the same by the predefined distance in the first direction.

15. Method according to claim 14, **characterized in that** step g) is carried out until the carrier (4.1-4.n) which is adjacent to the carrier (4.2-4.n) located closest to the stop element (25) has been moved.

16. Method according to one of claims 14 or 15, **characterized in that** between steps d) and e) all carriers (4.1-4.n) are each locked in their position by means of engagement of a locking element (27) with positioning elements (26) of the carriers (4.1-4.n), wherein before the movement of the push rod (6) in step f) or in step g) the positioning pin (28) of the respective carrier (4.1-4.n) to be moved is retracted in order to unlock the respective carrier (4.1-4.n).

## Revendications

1. Dispositif pour le traitement d'un matériau, en particulier d'un matériau en bande (8), comprenant au moins deux supports (4.1-4.n) avec respectivement au moins un outil de traitement (5.1-5.n) pour le matériau, au moins un guidage linéaire (3) sur lequel les au moins deux supports (4.1-4.n) sont disposés de manière à pouvoir se déplacer linéairement, ainsi qu'une tige de poussée (6) entraînée de manière mobile dans deux directions opposées le long du au moins un guidage linéaire (3), les au moins deux supports (4.1-4.n) disposant chacun d'un dispositif d'accouplement (9.1-9.n) permettant à chacun des au moins deux supports (4.1-4.n) de s'accoupler de manière sélective à la tige de poussée (6), le dispositif (1) disposant d'une commande permettant de commander les dispositifs d'accouplement (9.1-9.n) de manière à ce que la tige de poussée (6) puisse déplacer les au moins deux supports (4.1-4.n) ensemble le long du au moins un guidage linéaire (3) ou un ou plusieurs supports définis parmi les au moins deux supports (4.1-4.n), de manière à pouvoir modifier la distance entre les au moins deux supports (4.1-4.n).

2. Dispositif selon la revendication 1, **caractérisé en ce que** le dispositif d'accouplement (9.1-9.n) des au moins deux supports (4.1-4.n) dispose d'un serrage de tige, en particulier d'un serrage de tige pneumatique, électrique ou magnétique, qui coopère avec la tige de poussée (6).

3. Dispositif selon l'une des revendications 1 ou 2, **caractérisé en ce que** la tige de poussée (6) est reliée par une extrémité à un chariot (12) qui peut être déplacé dans deux directions de manière linéaire le long d'un axe qui est parallèle à l'au moins un guidage linéaire (3) au moyen d'un entraînement pneumatique, électrique ou électromécanique (7).

4. Dispositif selon la revendication 3, **caractérisé en ce que** le chariot (12) peut être déplacé au moyen d'une courroie crantée (13) reliée à la sortie d'un moteur électrique, en particulier d'un servomoteur, ou au moyen d'un moteur linéaire.

5. Dispositif selon l'une des revendications 1 à 4, **caractérisé en ce qu'**au moins un élément de verrouillage (27) est disposé à une position définie le long du au moins un guidage linéaire (3), lequel élément de verrouillage coopère avec un élément de positionnement (26) de l'un des au moins deux supports (4.1-4.n) afin de verrouiller celui-ci à la position définie.

6. Dispositif selon la revendication 5, **caractérisé en ce que** le au moins un élément de verrouillage (27) dispose d'une goupille de positionnement (28) qui peut être déplacée d'un état rentré à un état sorti dans lequel la goupille de positionnement (28) s'engage dans l'élément de positionnement (26).

7. Dispositif selon la revendication 6, **caractérisé en ce que** la au moins une goupille de positionnement (28) est précontrainte à l'état rentré au moyen d'un élément à ressort et peut être déplacée de manière sélective à l'état sorti au moyen d'un actionneur, en particulier d'un actionneur pneumatique.

8. Dispositif selon l'une des revendications 1 à 7, **caractérisé en ce que** les au moins deux supports (4.1-4.n) disposent chacun d'au moins un chariot (19, 20) qui est disposé de manière coulissante sur le au moins un guidage linéaire (3).

9. Dispositif selon l'une des revendications 1 à 8, **caractérisé en ce que** les au moins deux supports (4.1-4.n) disposent chacun d'au moins un outil d'usinage (5.1-5.n) pour couper et/ou former en trois dimensions un matériau en bande (8).

10. Dispositif selon l'une des revendications 1 à 9, **caractérisé en ce que** les au moins deux supports (4.1-4.n) comprennent chacun :
a) un premier bras (14) avec une première extrémité et une deuxième extrémité ;
b) une première zone de fixation (17) pour un outil d'usinage supérieur, la première zone de fixation (17) étant disposée dans la zone de la première extrémité du premier bras (14) ;
c) un deuxième bras (15) qui est disposé parallèlement au premier bras (14) et à une première distance de celui-ci, le deuxième bras (15) présentant une troisième et une quatrième extrémité ;
d) une deuxième zone de fixation (18) pour un outil d'usinage inférieur, la deuxième zone de fixation (18) étant disposée dans la zone de la troisième extrémité du deuxième bras (15), de telle sorte que l'outil d'usinage supérieur et l'outil d'usinage inférieur puissent coopérer pour usiner une bande de matériau s'étendant entre le premier bras (14) et le deuxième bras (15) ;
e) un bras de liaison (16) qui est relié à la deuxième extrémité du premier bras (14) ainsi qu'à la quatrième extrémité du deuxième bras (15) ;
f) un premier chariot (19) et un deuxième chariot (20) avec lesquels le support (4.1-4.n) peut être disposé de manière mobile sur deux guidages linéaires (3), le premier chariot (19) étant disposé sur le premier bras (14) et le deuxième chariot (20) sur le deuxième bras (15).

11. Dispositif selon l'une des revendications 1 à 10, **caractérisé en ce que** le dispositif (1) dispose de moyens de transport pour acheminer un matériau en bande (8) vers les outils d'usinage.

12. Procédé pour usiner, en particulier pour découper et/ou former en trois dimensions un matériau en bande (8), avec un dispositif (1) selon l'une des revendications 1 à 11, **caractérisé en ce qu'**après chaque cycle d'usinage du matériau en bande (8) par les outils d'usinage, les au moins deux supports (4.1-4.n) sont déplacés ensemble au moyen de la tige de poussée (6) alternativement dans une première direction et dans une deuxième direction opposée à la première direction sur une première distance.

13. Procédé selon la revendication 12, **caractérisé en ce que** des pièces moulées circulaires sont découpées dans le matériau en bande (8) et les au moins deux supports (4.1-4.n) sont déplacés après chaque cycle d'usinage, la première distance correspondant à la moitié du diamètre des pièces moulées circulaires, et de préférence le matériau en bande (8) est déplacé après chaque cycle d'usinage d'une deuxième distance qui correspond au moins à la moitié du diamètre des pièces moulées circulaires.

14. Procédé selon l'une des revendications 12 ou 13, **caractérisé en ce que**, avant l'usinage du matériau en bande (8), la distance entre les au moins deux supports (4.1-4.n) est modifiée par les étapes suivantes :
a) desserrage de tous les dispositifs d'accouplement (9.1-9.n) et déplacement de la tige de poussée (6) dans la première direction d'une position de base à une position finale ;
b) couplage de la tige de poussée (6) à un premier support (4.1) qui est le plus éloigné d'un élément de butée (25) du au moins un guidage linéaire (3) ;
c) déplacement de la tige de poussée (6) et du premier support (4.1) couplé à la tige de poussée (6) dans la deuxième direction jusqu'à ce qu'un support (4.2-4.n) situé le plus près de l'élément de butée (25) vienne buter contre l'élément de butée (25) ;
d) désaccoupler le premier support (4.1) de la tige de poussée (6) ;
e) déplacer la tige de poussée (6) dans la deuxième direction vers la position de base ;
f) coupler le premier support (4.1) à la tige de poussée (6) et déplacer la tige de poussée (6) et le premier support (4.1) qui y est couplé dans la première direction sur une distance prédéfinie ;
g) couplage séquentiel d'un support (4.2-4.n) adjacent au support (4.1-4.n) déplacé par le mouvement précédent de la tige de poussée (6) à la tige de poussée (6) et déplacement de celle-ci sur la distance prédéfinie dans la première direction.

15. Procédé selon la revendication 14, **caractérisé en ce que** l'étape g) est effectuée jusqu'à ce que le support (4.1-4.n) adjacent au support (4.2-4.n) le plus proche de l'élément d'arrêt (25) ait été déplacé.

16. Procédé selon l'une des revendications 14 ou 15, **caractérisé en ce qu'**entre les étapes d) et e), tous les supports (4.1-4.n) sont verrouillés dans leur position respectivement au moyen de l'engagement d'un élément de verrouillage (27) dans des éléments de positionnement (26) des supports (4.1-4.n), la tige de poussée (6) à l'étape f) ou à l'étape g), la goupille de positionnement (28) du support (4.1-4.n) à déplacer est rétractée afin de déverrouiller le support (4.1-4.n) concerné.
